(19) Europäisches Patentamt

European Patent Office

Office européen des brevets

(11) Veröffentlichungsnummer: **0 684 457 A2**

## (12) EUROPÄISCHE PATENTANMELDUNG

(21) Anmeldenummer: **95250102.1**

(22) Anmeldetag: **28.04.95**

(51) Int. Cl.$^6$: **G01F 1/66**

(30) Priorität: **04.05.94 DE 4416367**

(43) Veröffentlichungstag der Anmeldung:
**29.11.95 Patentblatt 95/48**

(84) Benannte Vertragsstaaten:
**DE ES FR GB IT SE**

(71) Anmelder: **NU-TECH GmbH**
**Ilsahl 5**
**D-24536 Neumünster (DE)**
Anmelder: **Stange, Gerd, Prof. Dr.-Ing.**
**Kronkamp 39**
**D-24589 Nortorf (DE)**

(72) Erfinder: **Stange, Gerd, Dr., Prof.**
**Kronkamp 39**
**D-24589 Nortorf (DE)**

(74) Vertreter: **UEXKÜLL & STOLBERG**
**Patentanwälte**
**Beselerstrasse 4**
**D-22607 Hamburg (DE)**

(54) **Ultraschall-Durchfluss-Messgerät.**

(57) Ein Ultraschall-Durchfluß-Meßgerät hat zwei ringförmige piezoelektrische Wandler (1, 2), die ringförmige piezoelektrische Elemente aufweisen oder aus piezoelektrischen Abschnitten zusammengesetzt sind. Beide Wandler (1, 2) sind in Axialsymmetrie auf Abstand zueinander angeordnet. Der eine ist als Ultraschallsender und der andere als Ultraschallempfänger geschaltet. Das Medium, dessen Durchflußrate gemessen werden soll, durchströmt beide Wandler (1, 2) im wesentlichen parallel zur Achse (L-L).

FIG. 1

Die Erfindung betrifft ein Ultraschall-Durchfluß-Meßgerät, mit dem die Durchflußrate eines strömenden gasförmigen oder flüssigen Mediums bestimmt werden kann.

Für industrielle Anwendungen ist die Messung der Durchflußrate von Gasen und Flüssigkeiten in Rohrsystemen von großer Bedeutung. Die meisten der existierenden Meßsysteme verwenden den Flüssigkeits- oder Gasfluß, um ein Rad anzutreiben, dessen Umdrehungszahl pro Zeiteinheit proportional zur Durchflußrate ist. Solche Meßsysteme sind jedoch über lange Zeitperioden nicht zuverlässig.

Andere bekannte Meßsysteme verwenden Ultraschall. Hier ist die Phasenverschiebung, die eine Ultraschallwelle in einem strömenden Medium erfährt, ein Maß für die Strömungsgeschwindigkeit des Mediums. Üblicherweise sind ein Ultraschallsender und ein Ultraschallempfänger in einer Rohrleitung unter einem gegebenen Winkel in bezug auf die Achse der Rohrleitung angeordnet. Ein Beispiel hierfür ist in EP 0 040 837 A1 beschrieben. Solche Systeme haben eine ziemlich komplexe Geometrie und den zusätzlichen Nachteil, daß die Meßgenauigkeit beeinträchtigt wird, weil die Phasenverschiebung von dem Cosinus des gegebenen, von 0° verschiedenen Winkels abhängt.

Grundsätzlich läßt sich die Strömungsgeschwindigkeit eines Mediums auch über eine Messung der Laufzeit von Ultraschall von einem Ultraschallsender zu einem Ultraschallempfänger bestimmen, wobei der Ultraschallsender impulsartig angeregt wird.

Es ist Aufgabe der Erfindung, ein Ultraschall-Durchfluß-Meßgerät zu schaffen, das eine einfache Geometrie hat und eine hohe Meßgenauigkeit ermöglicht.

Diese Aufgabe wird gelöst durch ein Ultraschall-Durchfluß-Meßgerät mit den Merkmalen des Patentanspruchs 1. Vorteilhafte Ausgestaltungen ergeben sich aus den Unteransprüchen.

Das erfindungsgemäße Ultraschall-Durchfluß-Meßgerät weist zwei ringförmige piezoelektrische Wandler auf, von denen der eine als Ultraschallsender und der andere als Ultraschallempfänger geschaltet ist. Die beiden Wandler sind auf Abstand zueinander angeordnet, wobei ihre Symmetrieachsen zusammenfallen. So ist eine vollständige Axialsymmetrie verwirklicht. Der zuvor erwähnte Winkel beträgt hierbei 0°, weshalb eine optimale Meßgenauigkeit erreicht wird.

Jeder der beiden Wandler kann von einem separaten Wandlergehäuse umgeben sein. Diese Maßnahme ermöglicht einerseits einen Schutz gegen Einflüsse des strömenden Mediums. Andererseits erlaubt ein Wandlergehäuse die Unterbringung von Material zur akustischen Entkopplung sowie das Anbringen eines Dämpfungsringes, der den betreffenden ringförmigen piezoelektrischen Wandler umgibt.

In einer bevorzugten Ausführungsform sind die beiden Wandler in die Wandung einer zylindrischen Rohrleitung integriert (jeweils direkt oder unter Verwendung eines separaten Wandlergehäuses), deren Längsachse mit der gemeinsamen Achse der Wandler zusammenfällt. Bei dieser Konstruktion ist der Querschnitt der Rohrleitung an den Positionen der Wandler nicht verringert. Das Ultraschall-Durchfluß-Meßgerät setzt daher dem Medium keinen zusätzlichen Strömungswiderstand entgegen.

Vorzugsweise sind die beiden Wandler in einem kurzen Rohrleitungsstück angeordnet, das mit endseitigen Anschlußelementen zur Verbindung mit dem Rohrleitungssystem versehen ist. Solche Anschlußelemente können z.B. Flansche oder Rohrmuffen sein, etwa der Art, wie sie bei dem vorhandenen Leitungssystem vorgesehen sind. Damit steht eine kompakte Komponente zur Verfügung, die ohne großen Aufwand in ein bestehendes Leitungssystem eingebaut werden kann.

Das erfindungsgemäße Ultraschall-Durchfluß-Meßgerät wird vorzugsweise in Selbsterregung betrieben, wobei die Ausgangsspannung des als Ultraschallempfängers geschalteten Wandlers nach Verstärkung auf den als Ultraschallsender geschalteten Wandler rückgekoppelt wird. Einzelheiten ergeben sich aus der nachfolgenden Beschreibung.

Alternativ ist der als Ultraschallempfänger geschaltete Wandler zur Messung der Laufzeit des Ultraschalls nach impulsartiger Anregung des als Ultraschallsender geschalteten Wandlers geschaltet. Die Laufzeitmessung bietet Vorteile, wenn mit größeren Störungen des Systems durch Schalleinkopplung in Rohrleitung und Gehäuse gerechnet werden muß. In diesem Fall kann durch ein elektronisches Gate zwischen der kurzen Laufzeit durch Rohrleitung oder Gehäuse und der längeren Laufzeit durch das Medium separiert werden.

Im folgenden wird die Erfindung unter Bezug auf ein Ausführungsbeispiel näher erläutert. Die Zeichnungen zeigen in

Figur 1     einen Längsschnitt durch ein Rohrleitungsstück, in das zwei ringförmige piezoelektrische Wandler integriert sind,

Figur 2     einen Längsschnitt durch einen piezoelektrischen Wandler, der von einem separaten Wandlergehäuse umgeben ist, und

Figur 3     eine Skizze zur Veranschaulichung der in den Formeln verwendeten Symbole.

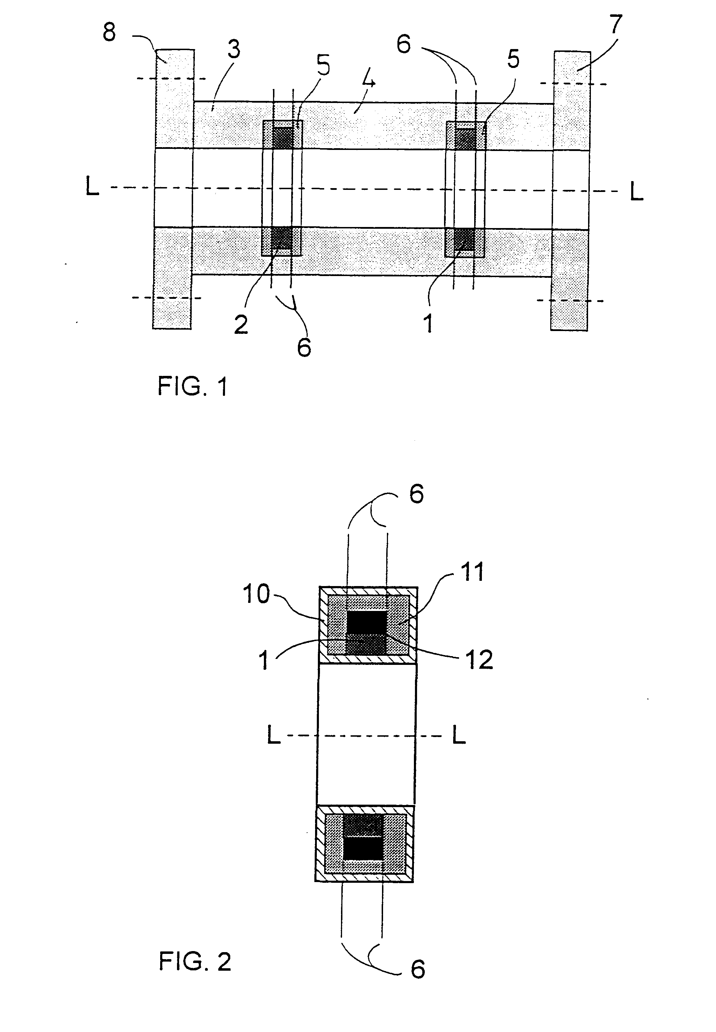

Wie in Figur 1 dargestellt, sind ein ringförmiger piezoelektrischer Wandler 1 und ein ringförmiger piezoelektrischer Wandler 2 auf Abstand angeordnet, wobei ihre Symmetrieachsen zusammenfallen. Die Wandler 1 und 2 können jeweils ringförmige piezoelektrische Elemente aufweisen oder auch aus piezoelektrischen Abschnitten zusammengesetzt sein. Beide Wandler 1, 2 befinden sich in einem Rohrleitungsstück 3, das von dem flüssigen oder gasförmigen Medium, dessen Durchflußrate gemessen werden soll, in Richtung der Längsachse L-L durchströmt wird. Der Strömungsquerschnitt ist kreisförmig. Die gemeinsame Achse der Rotationssymmetrie der Wandler 1, 2 fällt mit der Längsachse L-L zusammen.

Beide Wandler 1, 2 sind in gleicher Weise in die Wandung 4 des Rohrleitungsstücks 3 eingebettet. Zur akustischen Entkopplung zwischen den Wandlern 1, 2 und der Wandung 4 dient ein weiches Material 5, z. B. ein Schaumstoffmaterial. Die elektrischen Anschlüsse 6 der Wandler 1, 2 führen durch die Wandung 4 in abgedichteter Weise nach außen. Sie können als einfache Drähte oder auch als dünne Kupferbleche ausgebildet sein.

In einer alternativen Ausgestaltung sind die Wandler 1, 2 nicht unmittelbar in die Wandung 4 des Rohrleitungsstücks 3 eingesetzt, sondern jeder der Wandler 1, 2 ist von einem separaten Wandlergehäuse umgeben. Figur 2 zeigt, wie der Wandler 1 in einem solchen ringförmig ausgestalteten Wandlergehäuse 10 angeordnet ist. Zur akustischen Entkopplung dient ein vorzugsweise weiches Entkopplungsmaterial 11, und unmittelbar an seiner äußeren Peripherie ist der Wandler 1 von einem Dämpfungsring 12 umgeben. Die elektrischen Anschlüsse 6 sind in abgedichteter Weise nach außen geführt. Das Wandlergehäuse 10 kann z.B. aus rostfreiem Metall, Keramik oder Kunststoff bestehen. Auch eine Metall-Keramik-Konstruktion ist denkbar. Vorzugsweise sind die Anordnungen für den Wandler 1 und den Wandler 2 gleich.

Bei der Ausgestaltung mit separaten Wandlergehäusen sind die Wandler 1 und 2 mit den Wandlergehäusen vorzugsweise bündig in das Rohrleitungsstück 3 eingesetzt, so daß nach innen keine Teile vorspringen. Zusätzlich zu dem Entkopplungsmaterial 11 im Inneren der Wandlergehäuse können weitere Entkopplungsmaßnahmen zwischen der Außenseite der Wandlergehäuse und dem Rohrleitungsstück 3 vorgesehen sein, z.B. weiches Material 5, das ähnlich wie in Figur 1 angeordnet ist, um zu verhindern, daß das Rohrleitungsstück 3 an der Ausbreitung des Ultraschallfeldes beteiligt ist. Eine geeignete Entkopplung kann zum Beispiel auch dadurch erreicht werden, daß das Rohrleitungsstück 3 selbst zwischen den Wandlern 1 und 2 mit bekannten Methoden bedämpft wird.

An seinen Enden ist das Rohrleitungsstück 3 mit einem Flansch 7 und einem Flansch 8 versehen. Der aus dem Rohrleitungsstück 3 und den beiden Wandlern 1, 2 bestehende Durchflußsensor kann daher ohne großen Aufwand in ein bestehendes Rohrleitungssystem, in dem ebenfalls Flanschverbindungen üblich sind, eingefügt werden.

Es sind verschiedene Herstellungsmöglichkeiten denkbar. So können die Wandler 1, 2 in das Rohrleitungsstück 3, das aus Kunststoff bestehen kann, eingegossen werden. Alternativ könnte das System aus vorgefertigten ringförmigen Abschnitten zusammengeklebt werden. Solche vorgefertigten ringförmigen Abschnitte lassen sich aus den unterschiedlichsten metallischen oder nichtmetallischen Werkstoffen herstellen. So ist auch Keramik mit Metall-Keramik-Verbindungen denkbar. Wenn die Wandler 1, 2, die vorzugsweise aus einer Piezokeramik bestehen, nicht mit dem Medium in Berührung kommen sollen, können sie mit einer Schutzschicht versehen sein. Daneben bieten die bereits erwähnten separaten Wandlergehäuse Schutz gegen Berührung mit dem Medium.

Da die Wandler 1, 2 nicht ins Innere des Rohrleitungsstücks 3 vorspringen, bilden sie für das strömende Medium kein Hindernis, so daß dessen Strömungsgeschwindigkeit durch die Wandler 1, 2 praktisch nicht verändert wird.

Das Ultraschall-Durchfluß-Meßgerät hat eine hohe Empfindlichkeit, wenn die beiden Wandler 1, 2 in Selbsterregung betrieben werden (insbesondere, wenn dies in der Nähe einer Resonanzfrequenz der Fall ist, siehe unten), was im folgenden näher erläutert wird.

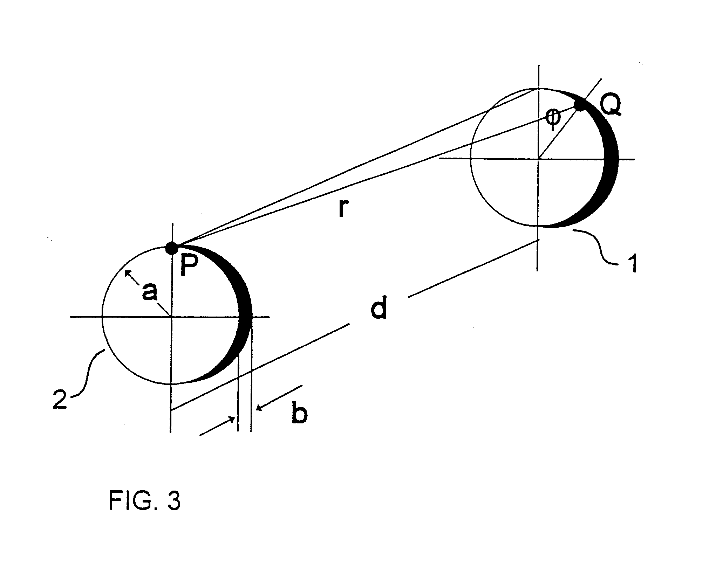

Figur 3 veranschaulicht in perspektivischer Ansicht die ringförmige Geometrie des Systems mit dem beiden Wandlern 1 und 2. Der Wandler 1 ist als Ultraschallsender und der Wandler 2 als Ultraschallempfänger geschaltet. Die Entfernung r zwischen einem Quellpunkt Q an der Innenseite des Wandlers 1, der ebenso wie der Wandler 2 den Innenradius a hat, und einem Feldpunkt P an der Innenseite des Wandlers 2 ergibt sich aus Figur 3 zu

$$r = \sqrt{(a - a\cos\phi)^2 + (a\sin\phi)^2 + d^2}. \tag{1}$$

d ist der Abstand der beiden Wandler 1 und 2. Unter Anwendung trigonometrischer Beziehungen läßt sich Gleichung (1) umwandeln in

$$r = d \sqrt{1 + \left(2\frac{a}{d}\sin\frac{\varphi}{2}\right)^2}. \qquad (2)$$

Nun wird angenommen, daß der als Ultraschallsender geschaltete Wandler 1 in einer rein radialen Mode mit der gegebenen komplexen Geschwindigkeitsamplitude $\underline{v}_0$ oszilliert, und zwar oberhalb einer vorgegebenen, vom Durchmesser des Rohrleitungsstücks 3 abhängenden Abschneidefrequenz. (Unterhalb der Abschneidefrequenz liegen keine transversalen Anteile, sondern nur longitudinale Wellen vor, die sich im Medium als ebene Wellen entlang dem Rohrleitungsstück 3 ausbreiten.) Dann kann das Schallfeld mit der komplexen Druckamplitude $\underline{p}$ im Medium mit der Dichte $\rho$ ausgedrückt werden als:

$$\underline{p} = \frac{j\omega\rho}{2\pi} \int_S \underline{v}_0 \frac{e^{-jkr}}{r} dS_I \qquad (3)$$

siehe Cremer, L., Hubert, M., "Vorlesungen über Technische Akustik", 4. Auflage, Springer, Berlin 1990, Gl. 2-217, Seite 178. Hier ist die Wellenzahl k der Quotient aus der Kreisfrequenz $\omega$ des Senders und der Schallgeschwindigkeit c des betrachteten Mediums:

$$k = \omega/c. \qquad (4)$$

Die Integration erstreckt sich über die Oberflache S des gesamten betrachteten Schallfeldgebietes. Nimmt man überall auf dieser Oberfläche außer an den Innenflächen des als Ultraschallsender geschalteten piezoelektrischen Rings feste Wände mit $\underline{v}_0 = 0$ an, erstreckt sich die Integration lediglich über die innere Ringfläche des Wandlers 1.

In erster Näherung kann angenommen werden, daß der Radius a klein ist im Vergleich zu dem Abstand d der Wandler 1 und 2 (siehe Figur 3):

$$a << d. \qquad (5)$$

Der Integrand aus Gleichung (3) kann dann in eine Taylor-Reihe entwickelt werden, was unter Berücksichtigung von Termen erster Ordnung mit Gleichung (2) ergibt:

$$\frac{e^{-jkd\sqrt{1+\left(2\frac{a}{d}\sin\frac{\varphi}{2}\right)^2}}}{d\sqrt{1+\left(2\frac{a}{d}\sin\frac{\varphi}{2}\right)^2}} \approx \frac{e^{-jkd}}{d}\left[1 - (1+jkd)\,2\left(\frac{a}{d}\sin\frac{\varphi}{2}\right)^2\right]. \qquad (6)$$

Für das Druckfeld folgt aus Gleichung (3) dann:

$$\underline{p} = 2\frac{j\omega\rho}{2\pi}\,\underline{v}_0\,\frac{b\,a}{d}\,e^{-jkd}\int_0^\pi \left[1 - (1+jkd)\,2\left(\frac{a}{d}\sin\frac{\varphi}{2}\right)^2\right]\,d\varphi. \qquad (7)$$

Nach Ausführung der Integration erhält man:

$$\underline{p} \approx j\omega\rho\,\underline{v}_0\,\frac{ab}{d}\,e^{-jkd}\left[1 - \frac{a^2}{d^2} - jkd\,\frac{a^2}{d^2}\right]. \qquad (8)$$

Dieses Ergebnis läßt sich leicht interpretieren: Eine sich von dem Ultraschallsender 1 zu dem im Abstand d befindlichen Ultraschallempfänger 2 in axialer Richtung ausbreitende Schallwelle erfährt eine Phasenverschiebung, die aus dem erwarteten Betrag kd plus dem Korrekturterm

$$\Delta\varphi = \arctan \frac{kd \, \frac{a^2}{d^2}}{1 - \frac{a^2}{d^2}} \qquad (9)$$

besteht, der unter der Annahme gemäß Gleichung (5) näherungsweise als

$$\Delta\varphi \approx kd \, \frac{a^2}{d^2} \qquad (10)$$

ausgedrückt werden kann. Dieser Korrekturterm faßt die Weglängendifferenzen zwischen allen Quellpunkten auf dem Ring des Ultraschallsenders 1 und einem Feldpunkt auf dem Ring des Ultraschallempfängers 2 zusammen. Die Korrektur ist umso kleiner, je größer der Abstand d der Wandler 1 und 2 im Vergleich zum Innenradius a der ringförmigen Wandler 1 und 2 ist.

Das am Ultraschallempfänger 2 beobachtete Druckfeld wird, da der Ultraschallempfänger ein piezoelektrischer Wandler ist, in eine entsprechende Ausgangsspannung umgewandelt. Dieses Signal wird nun verstärkt und dem als Ultraschallsender geschalteten piezoelektrischen Wandler 2 als Rückkopplungssignal zugeführt. Das kann zu einer Selbsterregung des Systems führen, und zwar dann, wenn die Phasendifferenz zwischen der Eingangsspannung für den Ultraschallsender und der Ausgangsspannung des Ultraschallempfängers Null oder ein ganzzahliges Vielfaches von $2\pi$ ist. Diese gesamte Phasendifferenz hat zwei Beiträge, einen von der Schallausbreitung und den anderen von der Summe der internen Phasenverschiebungen des Ultraschallsenders bzw. -empfängers. Der letztgenannte Beitrag verschwindet, wenn die beiden Wandler 1 und 2 die gleichen physikalischen Eigenschaften haben. Dies kann z.B. erzielt werden, indem man sie als unter gleichen Bedingungen hergestellte Paare auswählt.

Eine weitere denkbare Möglichkeit, ein aus Ultraschallsender und Ultraschallempfänger bestehendes Paar mit gleichen Eigenschaften zu erhalten, ist das Zerschneiden eines piezoelektrischen Ringes in zwei gleiche Halbringe. Dann kann der eine Halbring als Ultraschallsender und der andere als Ultraschallempfänger betrieben werden.

Um die Selbsterregung des Systems zu erreichen, muß also die von der Schallausbreitung herrührende Phasendifferenz ein ganzzahliges Vielfaches von $2\pi$ sein. Unter Berücksichtigung der Gleichungen (8), (9) und (10) erhält man daraus die folgende Bedingung für den axialen Abstand d zwischen dem Ultraschallsender und dem Ultraschallempfänger, bei welchem bei gegebener Winkelfrequenz $\omega = c\,k$ im ruhenden Medium Selbsterregung auftritt:

$$kd + \arctan k \frac{a^2}{d} = n \, 2\pi. \qquad (11)$$

Mit Hilfe des Additionstheorems für die Tangensfunktion folgt daraus

$$\frac{\tan kd + k \frac{a^2}{d}}{1 - k \frac{a^2}{d} \tan kd} = 0 \qquad (12)$$

oder

$$\tan kd \; = -k\,\frac{a^2}{d}. \qquad\qquad (13)$$

Gleichung (13) kann iterativ nach d aufgelöst werden. Dazu wird zunächst der Korrekturterm $\delta$ definiert als

$$\delta + n\lambda = d, \qquad\qquad (14)$$

wobei $\lambda$ = $2\pi/k$ die Wellenlänge des Ultraschalls und n eine natürliche Zahl ist. Aus den Gleichungen (13) und (14) folgt die Iterationsbedingung

$$\delta = -\frac{1}{k}\arctan\left(\frac{a^2}{n\lambda + \delta}\right). \qquad\qquad (15)$$

Im folgenden wird ein numerisches Beispiel für den Iterationsprozeß für zwei verschiedene Werte von n angegeben.

Die Ultraschallfrequenz f = $\omega/(2\pi)$ beträgt jeweils 150 kHz, die Schallgeschwindigkeit c jeweils 1400 m/s, woraus sich eine Schallwellenlänge $\lambda$ von $9,33\cdot10^{-3}$ m ergibt; für a ist ein Wert von 0,01 m angenommen. Der Startwert für $\delta$ ist in beiden Fällen $-2\cdot10^{-3}$ m. Wie die folgende Tabelle zeigt, genügen etwa vier Iterationsschritte:

| n = 1: | n = 5: |
|---|---|
| $-2,172\cdot10^{-3}$ m | $-1,460\cdot10^{-3}$ m |
| $-2,333\cdot10^{-3}$ m | $-1,450\cdot10^{-3}$ m |
| $-2,179\cdot10^{-3}$ m | $-1,455\cdot10^{-3}$ m |
| $-2,176\cdot10^{-3}$ m | $-1,455\cdot10^{-3}$ m |

Die oben angegebene Herleitung gilt für jede Ultraschallfrequenz. Das System arbeitet jedoch besonders effizient, wenn die beiden Wandler 1 und 2 in der Nähe einer Resonanzfrequenz betrieben werden. An der Resonanzstelle wird nämlich die elektrische Leistung optimal in Schalleistung gewandelt und umgekehrt. Dies soll nochmals verdeutlicht werden: Zu unterscheiden ist die Selbsterregung des aus Sender, Schallübertragungsstrecke, Empfänger und elektrischer Rückführüg über Verstärker bestehenden geschlossenen Systems von der Resonanzfrequenz der Wandler selbst. Prinzipiell ist Selbsterregung bei jeder Ultraschallfrequenz möglich, wenn die Erfüllung der Phasenbedingung im Schallfeld und eine hinreichende Verstärkung gewährleistet sind. Besonders vorteilhaft ist jedoch die Wahl einer Selbsterregungsfrequenz, die mit der Resonanzfrequenz der Wandler selbst zusammenfält. In diesem Fall ist nämlich nur eine geringe Verstärkung in der elektrischen Signalrückführung erforderlich.

In der Praxis kann man die Parameter für ein in Selbsterregung betriebenes Ultraschallsender-Ultraschallempfänger-Paar nach folgendem Schema bestimmen:

- Auswählen einer geeigneten Eigenmode (radiale Schwingung) des piezoelektrischen Systems, wobei beide Wandler 1 und 2 die gleichen Eigenschaften haben.
- Daraus ergibt sich die gewünschte Betriebsfrequenz bei Selbsterregung des Systems als die Eigenfrequenz; die Summe der internen Phasenverschiebungen verschwindet.
- Auswählen der natürlichen Zahl n, d.h. der Anzahl der zwischen dem Ultraschallsender und dem Ultraschallempfänger liegenden Wellenlängen.
- Bestimmen des korrekten Abstands d unter Verwendung der Gleichung (14).

Bisher wurde angenommen, daß das Medium, in dem sich die Schallwellen zwischen dem Ultraschallsender und dem Ultraschallempfänger ausbreiten, ruht. Nun wird eine konstante Strömungsgeschwindigkeit v betrachtet, die ein Maß für die Durchflußrate ist.

Wenn sich das Medium bewegt, wächst oder sinkt die Ausbreitungsgeschwindigkeit des Ultraschalls, je nachdem, ob die Schallausbreitung in Richtung oder entgegen der Richtung der Strömungsgeschwindigkeit erfolgt. Falls mit einer festen Schallfrequenz gearbeitet wird, ändert sich dadurch die Wellenlänge, was in einer Phasenverschiebung resultiert. Wäre das System bei ruhendem Medium auf Selbsterregung abgestimmt, wobei $f_0$ die Ultraschallfrequenz entsprechend einer Eigenmode des Systems ist, wie zuvor erläutert, so würde es bei nicht verschwindender Durchflußgeschwindigkeit verstimmt, da die Phasenbedingung nach Gleichung (14) nicht mehr erfüllt ist. Wenn jedoch eine andere Schallfrequenz ausgewählt wird, so daß die Wellenlänge $\lambda$ unter Beachtung der Gleichung (14) bei dem Wert $\lambda_0$ fest bleibt, kann das System auch bei nicht verschwindender Strömungsgeschwindigkeit im Zustand der Selbsterregung gehalten werden. Die Bedingung dafür läßt sich ausdrücken als

$$\frac{c + v}{f_0 + \Delta f} = \lambda_0, \qquad\qquad (16)$$

wobei $\Delta f$ die Frequenzverschiebung ist. Aus Gleichung (16) folgt

$$\Delta f = \frac{f_0}{c} v = \frac{v}{\lambda_0}. \qquad\qquad (17)$$

Wenn die Resonanzkurve der Wandler 1 und 2 schmal ist, also ein ausgeprägtes Maximum hat, führt eine Frequenzverschiebung $\Delta f$ aus dem Maximum hinaus, so daß die Schwingungsamplitude der Wandler 1, 2 bei einer Durchflußmessung rasch abfallen wurde. Dies ist für einen stabilen Betrieb unter Selbsterregungsbedingungen problematisch, auch wenn ein Verstärker angewendet wird. Ein geeignetes Gegenmittel ist eine vergrößerte Bandbreite des Systems, d.h. eine Verbreiterung der Resonanzkurve, was sich z.B. erreichen läßt, wenn Wandlergehäuse und zugeordnete mechanische Komponenten (siehe z.B. Figur 2) Resonanzen haben, die nahe an der ausgewählten Resonanz der piezoelektrischen Komponenten liegen. In diesem Falle verhält sich die Resonanzkurve so wie diejenige von gekoppelten Resonatoren. Um einen flachen Verlauf der Resonanzkurve zu erzielen, ist eine ausreichende Dämpfung erforderlich.

Die Auswahl der geeigneten Frequenzverschiebung $\Delta f$ ergibt sich selbsttätig, da das geschlossene, rückgeführte Sender-Schallstrecke-Empfänger-System den Zustand der Selbsterregung von sich aus anstrebt, um die Phasenbeziehung einzuhalten. Dies ist dann der Fall, wenn das System bei der der Strömungsgeschwindigkeit v entsprechenden Frequenzverschiebung arbeitet.

Bisher wurde angenommen, daß die Schallgeschwindigkeit konstant ist bzw. von der Strömungsgeschwindigkeit des Mediums abhängt. In der Praxis ist dies jedoch nur für eine konstante Temperatur korrekt. Abweichungen von dieser Temperatur führen zu Änderungen in der Schallgeschwindigkeit, was in zusätzlichen Phasenverschiebungen resultiert. Um dies auszugleichen, muß die Frequenz bei Beibehaltung der Selbsterregung zusätzlich verschoben werden. In der Praxis übersteigt die Frequenzverschiebung infolge des Temperatureffekts häufig die auf die Strömungsgeschwindigkeit zurückzuführende. Der Temperatureffekt kann jedoch kompensiert werden, indem bei Schallausbreitung in beiden Richtungen, d.h. parallel und antiparallel zur Strömungsrichtung, gemessen wird und dann die Differenz der Frequenzverschiebungen berücksichtigt wird. Die Bandbreite muß die Summe der Frequenzverschiebungen entsprechend der Temperatur und der Strömungsgeschwindigkeit abdecken.

Um bei Schallausbreitung in beiden Richtungen zu messen, muß jeder der Wandler 1, 2 wahlweise als Ultraschallsender oder als Ultraschallempfänger schaltbar sein. Während also zunächst - wie bisher angenommen - der Wandler 1 als Ultraschallsender und Wandler 2 als Ultraschallempfänger arbeitet, werden anschließend für die Messung in Gegenrichtung ihre Rollen vertauscht. Dies läßt sich durch geeignete, dem Fachmann geläufige Schaltungsanordnungen erreichen.

Die Strömungsgeschwindigkeit v des Mediums ist ein Maß für die Durchflußrate. Um auf die pro Zeiteinheit durch den Bereich der Wandler 1, 2 hindurchtretende Masse des Mediums zu schließen, muß die Strömungsgeschwindigkeit mit der Dichte des Mediums und der Querschnittsfläche multipliziert werden. Wenn die Strömungsgeschwindigkeit über die Querschnittsfläche nicht konstant ist, kann die Abhängigkeit der Durchflußrate von der gemessenen Frequenzverschiebung durch Eichmessungen bestimmt werden.

Eine weitere Möglichkeit zur Bestimmung der Strömungsgeschwindigkeit des bewegten Mediums besteht in der Messung der Laufzeit, die ein Ultraschallimpuls benötigt, um von dem als Ultraschallsender geschalteten ringförmigen piezoelektrischen Wandler zu dem als Ultraschallempfänger geschalteten ringförmigen piezoelektrischen Wandler zu gelangen. Bei bekanntem Abstand der Wandler ist die Laufzeit ein Maß für die von der Strömungsgeschwindigkeit und der Strömungsrichtung abhängende Ausbreitungsgeschwindigkeit des Ultraschalls.

Im Gegensatz zu dem Verfahren der Selbsterregung, das auf einen quasistationären, zeitlich periodischen Betrieb angewiesen ist, arbeitet die Laufzeitmessung im Impulsbetrieb. Dies hat den Vorteil, auf elektronischem Wege mit Hilfe eines Gates zwischen der Körperschallausbreitung auf dem Rohrleitungsstück und der zu messenden Schallausbreitung durch das strömende Medium separieren zu können. Weitere Vorteile liegen in der klaren Trennmöglichkeit gegen Störungen, z.B. durch Schalleinstrahlung von außen oder durch Reflexionen von Ultraschallwellen. Eine Laufzeitmessung erweist sich auch dann als vorteilhaft, wenn die Wandler gegenüber dem Rohrleitungsstück oder Gehäuse nicht hinreichend akustisch entkoppelt sind.

Wenn - ähnlich wie bereits im Zusammenhang mit dem Verfahren der Selbsterregung erörtert - durch Vertauschen von Ultraschallsender und -empfänger Messungen in Strömungsrichtung des Mediums und entgegen der Strömungsrichtung durchgeführt werden, um die Laufzeitdifferenz zu bestimmen, lassen sich Temperatureffekte eliminieren.

**Patentansprüche**

1. Ultraschall-Durchfluß-Meßgerät, mit zwei ringförmigen piezoelektrischen Wandlern (1, 2), die ringförmige Piezoelemente aufweisen oder aus piezoelektrischen Abschnitten zusammengesetzt sind, wobei beide Wandler (1, 2) in Axialsymmetrie auf Abstand zueinander angeordnet sind und der eine als Ultraschallsender und der andere als Ultraschallempfänger geschaltet ist, und wobei das Medium, dessen Durchflußrate gemessen werden soll, beide Wandler (1, 2) im wesentlichen parallel zur Achse (L-L) durchströmt.

2. Ultraschall-Durchfluß-Meßgerät nach Anspruch 1, dadurch gekennzeichnet, daß jeder der beiden Wandler (1, 2) von einem separaten Wandlergehäuse (10) umgeben ist.

3. Ultraschall-Durchfluß-Meßgerät nach Anspruch 1 oder 2, dadurch gekennzeichnet, daß die beiden Wandler (1, 2) in die Wandung (4) einer zylindrischen Rohrleitung (3) integriert sind, deren Längsachse (L-L) mit der gemeinsamen Achse der Wandler (1, 2) zusammenfällt, so daß der Querschnitt der Rohrleitung (3) bei den Positionen der Wandler (1, 2) nicht verringert ist.

4. Ultraschall-Durchfluß-Meßgerät nach Anspruch 3, dadurch gekennzeichnet, daß die beiden Wandler (1, 2) von der Wandung (4) der Rohrleitung (3) durch Einbettung in weiches Material (5; 11) akustisch entkoppelt sind.

5. Ultraschall-Durchfluß-Meßgerät nach Anspruch 3 oder 4, dadurch gekennzeichnet, daß die beiden Wandler (1, 2) in einem kurzen Rohrleitungsstück (3) angeordnet sind, das mit endseitigen Anschlußelementen (7, 8) zur Verbindung mit dem Rohrleitungssystem versehen ist.

6. Ultraschall-Durchfluß-Meßgerät nach einem der vorhergehenden Ansprüche, dadurch gekennzeichnet, daß die Ausgangsspannung des als Ultraschallempfänger geschalteten Wandlers (2) nach Verstärkung auf den als Ultraschallsender geschalteten Wandler (1) rückgekoppelt ist.

7. Ultraschall-Durchfluß-Meßgerät nach Anspruch 6, dadurch gekennzeichnet, daß beide Wandler (1, 2) die gleichen physikalischen Eigenschaften haben und daß bei Selbsterregung des Systems in radial oszillierender Mode der Wandler (1, 2) zwischen dem axialen Abstand d der beiden Wandler (1, 2) und der Schallwellenlänge $\lambda$ die Beziehung

$$d = \delta + n \lambda$$

besteht, wobei n eine natürliche Zahl ist und für $\delta$ die iterativ lösbare Gleichung

$$\delta = (-\lambda/(2 \pi)) \arctan(a^2/(n \lambda + \delta))$$

gilt, wobei a der Innenradius der Wandler (1, 2) ist.

8. Ultraschall-Durchfluß-Meßgerät nach Anspruch 7, dadurch gekennzeichnet, daß sich die Strömungsgeschwindigkeit v des Mediums aus der Beziehung

$$(c + v)/(f_0 + \Delta f) = \lambda_0$$

ergibt, wobei $f_0$ die Ultraschallfrequenz bei Selbsterregung im ruhenden Medium ist, das die Schallgeschwindigkeit c hat, wobei $\Delta f$ die Frequenzverschiebung bei Selbsterregung im Medium mit der Strömungsgeschwindigkeit v ist und wobei $\lambda_0 = c/f_0$ die Schallwellenlänge ist, bei der d gemäß Anspruch 7 festgelegt ist.

9. Ultraschall-Durchfluß-Meßgerät nach Anspruch 7 oder 8, dadurch gekennzeichnet, daß die Wandler (1, 2) bei Selbsterregung in der Nähe einer Resonanzfrequenz für eine radial oszillierende Mode betrieben werden.

10. Ultraschall-Durchfluß-Meßgerät nach Anspruch 9, dadurch gekennzeichnet, daß die Resonanzkurve verbreitert ist.

11. Ultraschall-Durchfluß-Meßgerät nach einem der Ansprüche 1 bis 5, dadurch gekennzeichnet, daß der als Ultraschallempfänger geschaltete Wandler (2) zur Messung der Laufzeit des Ultraschalls nach impulsartiger Anregung des als Ultraschallsender geschalteten Wandlers (1) geschaltet ist.

12. Ultraschall-Durchfluß-Meßgerät nach einem der vorhergehenden Ansprüche, dadurch gekennzeichnet, daß jeder der Wandler (1, 2) wahlweise als Ultraschallsender oder als Ultraschallempfänger schaltbar ist.

EP 0 684 457 A2

FIG. 1

FIG. 2

FIG. 3